Europäisches Patentamt

European Patent Office

Office européen des brevets

(11) Numéro de publication: **0 511 355 B1**

# (12) FASCICULE DE BREVET EUROPEEN

(45) Date de publication de fascicule du brevet: **19.07.95**  (51) Int. Cl.⁶: **B65G 5/00**, F17C 3/00

(21) Numéro de dépôt: **91920186.3**

(22) Date de dépôt: **04.11.91**

(86) Numéro de dépôt internationale :
**PCT/FR91/00860**

(87) Numéro de publication internationale :
**WO 92/08662 (29.05.92 92/12)**

(54) **DISPOSITIF POUR L'EXPLOITATION EN SECURITE RENFORCEE DES STOCKAGES SOUTERRAINS DE GAZ LIOUEFIE.**

(30) Priorité: **15.11.90 FR 9014208**

(43) Date de publication de la demande:
**04.11.92 Bulletin 92/45**

(45) Mention de la délivrance du brevet:
**19.07.95 Bulletin 95/29**

(84) Etats contractants désignés:
**AT BE CH DE DK ES FR GB GR IT LI NL SE**

(56) Documents cités:
**EP-A- 0 013 854
EP-A- 0 214 890
EP-A- 0 217 693
WO-A-90/05687**

(73) Titulaire: **Dufourneaud, Jean-Marie
31, rue du Cottage
F-92410 Ville d'Avray (FR)**

(72) Inventeur: **Dufourneaud, Jean-Marie
31, rue du Cottage
F-92410 Ville d'Avray (FR)**

(74) Mandataire: **Le Roux, Martine et al
Cabinet Beau de Loménie
158, rue de l'Université
F-75340 Paris Cédex 07 (FR)**

Rank Xerox (UK) Business Services
(3.10/3.09/3.3.3)

## Description

La présente invention concerne un dispositif pour garantir la sécurité d'un stockage souterrain de gaz liquéfié.

Le stockage est généralement constitué d'un ensemble de galeries de disposition appropriée et situées à une profondeur adaptée au produit à stocker et telles que la pression intersticielle de l'eau dans le terrain étant un peu supérieure à la tension de vapeur du gaz liquéfié stocké à la température du terrain, cette eau du terrain pénètre dans le stockage, empêchant donc le gaz liquéfié de s'échapper du stockage vers le terrain et assurant donc l'étanchéité.Dans une galerie de stockage on rencontre donc l'eau d'exhaure du terrain qui ruisselle le long des parois, s'écoule sur le fond ou radier du stockage et s'accumule dans les points bas puis la phase liquide du gaz liquéfié qui occupe le fond du stockage et enfin au dessus de la phase liquide se trouve la phase gaz qui occupe tout le reste du volume du stockage.

Différentes liaisons par tuyauteries assurent les communications nécessaires entre le stockage et la surface afin de réaliser les fonctions élémentaires permettant le fonctionnement du stockage: réception du gaz liquéfié à stocker, extraction du gaz liquéfié hors du stockage, extraction de l'eau d'exhaure, mesures de niveau, de température, de pression, alarmes.

On sait par le brevet, EP-A-0013854, GEOSTOCK, que pour ce type précis de stockage, il est important d'éviter tout risque d'éruption de gaz et de liquide, c'est-à-dire une sortie massive d'hydrocarbure, qui pourrait donner lieu à des incendies et des explosions d'ampleur catastrophique. Connaissant les dégâts considérables causés par le passe par les explosions des nuages explosifs de quelques dizaines de tonnes de gaz liquéfié de citernes de transport on ne peut qu'insister sur ces craintes lorsqu'on sait que la fuite incontrôlée possible d'un tel grand stockage, par fracturation du terrain par exemple, vide totalement le stockage et peut créer un nuage explosif de puissance globale considérable -plusieurs fois la bombe de Hiroshima- et surtout pouvant parcourir plusieurs dizaines de kilomètres (gaz liquéfiés comme le propane ou le butane par exemple, plus lourds que l'air et donc extrêmement dangereux dans la mesure où les fuites créent des nappes s'étalant et circulant au niveau du sol).

En ce qui concerne les liaisons entre stockage et surface qui pourraient amener des fuites du stockage il faut en matière de danger insister sur la liaison directe de la phase gaz du stockage,par l'évent,dont une rupture peut provoquer la vidange complète du stockage,rapide et continue car l'ensemble du terrain entourant le stockage sert de source chaude pour faire bouillir le liquide du stockage après une dépressurisation partielle et un abaissement de la température d'équilibre.

On connait, par le brevet EP-A-0013854, GEOSTOCK, un modèle de stockage proche du type de celui décrit dans la présente invention.

Selon ce dernier, certaines liaisons entre le stockage et la surface sont telles qu'un isolement puisse être réalisé au niveau du stockage, sous la forme d'un bouchon hydraulique équilibrant la pression du stockage; mais ces bouchons hydrauliques doivent être réalisés par des manipulations et injections par remplissage des tubes d'eau par le haut, après manifestation du danger, au moment où il est décidé de les réaliser, ce qui n'est pas forcément facile ou possible si la zone est déjà dangereuse et les équipements nécessaires déjà détruits. Le dispositif selon l'invention remédie à cet inconvénient d'une part en permettant l'isolement par bouchon hydraulique de toutes les liaisons partant du stockage y compris la liaison d'évent et d'autre part en permettant la réalisation de façon automatique des bouchons hydrauliques sans manipulations ou injections d'eau car l'eau des bouchons hydrauliques existe en permanence dans des réserves internes au stockage. Selon le procédé cité, la fermeture des communications est assurée pour toute connexion pénétrant dans la phase liquide du produit, par remplissage d'eau jusqu'au niveau d'équilibre hydrostatique. Or la ligne d'évent d'un tel stockage est une ligne fixe montante reliant directement la phase gaz à la surface et donc non isolable par bouchon d'eau. Le dispositif selon l'invention remédie à cet inconvénient en rendant possible l'isolement de l'évent par bouchon d'eau comme pour les autres liaisons et par suppression de la liaison directement à l'intérieur du stockage en cas de danger.

Le surremplissage est le danger principal que puisse courir le stockage souterrain en matière de surpression essentiellement lors des réceptions de grandes quantités à grand débit c'est-à-dire les réceptions de cargaisons réfrigérées. Selon le procédé cité le surremplissage est possible puisque dans la situation de sécurité maximum, dite de "mise en sommeil", aucune sortie de produit n'est possible (déstockage), mais il est cependant possible de recevoir du produit (stockage). Le surremplissage conduit à remplir totalement très rapidement la cavité en liquide incompressible puis instantanément la colonne montante de l'évent et donc à réaliser l'expérience du tonneau de PASCAL, avec fracturation probable du stockage car alors la pression atteinte dans le stockage est de 2 à 6 fois supérieure à la pression de calcul. Ceci est d'autant plus grave que la protection par soupape de sûreté est illusoire puisque la soupape,en surface, peut s'ouvrir correctement à la pression de tarage prévue alors que la pression en cavité est plusieurs fois supérieure. Le dispositif selon l'invention remédie à cet inconvénient puisque le niveau de l'ouverture d'évent en phase gaz correspond exactement au niveau maximum de remplissage autorisé du stockage et qu'au delà de ce niveau indéréglable, la pénétration de liquide dans le tube évent interdit toute réception de produit.

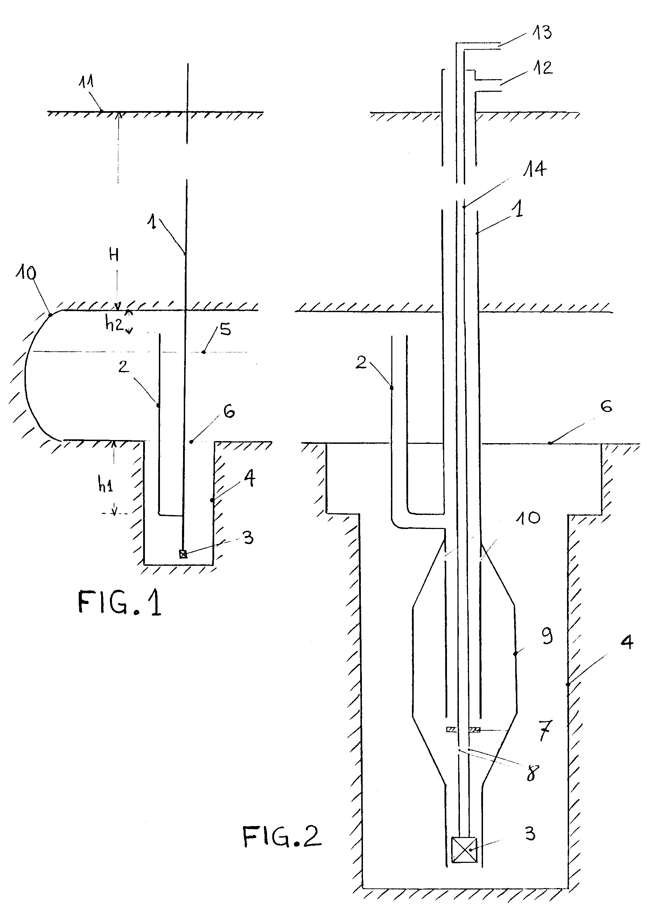

La figure 1 représente un schéma fonctionnel de la ligne d'évent selon l'invention.Il relie le stockage souterrain (10) au sol (11) par le tube principal (1) aboutissant à son extrémité basse dans un puits d'eau (4).Le tube latéral (2) est relié au tube principal (1) en un point situé à la profondeur h1 dans le puits. Le tube principal est terminé dans le puits d'eau par un clapet (3) généralement à commande hydraulique ou pneumatique permettant d'ouvrir ou fermer le tube principal (1) vers le puits. La fonction évent c'est-à-dire l'accès à la phase gaz du stockage est réalisée lorsque le clapet (3) est fermé et que le niveau de l'eau à l'intérieur du tube principal (1) est situé en dessous du raccordement du tube latéral (2) sur le tube principal (1). Dans le stockage l'eau remplit le puits (4) jusqu'au niveau (6) qui dans la majorité des situations correspond au fond du stockage. La phase liquide du gaz liquéfié stocké occupe le bas du stockage jusqu'au niveau (5). Le tube latéral (2) débouche dans la phase gaz du stockage au dessus du niveau liquide (5) et on a bien la communication assurée entre la phase gaz et le sol où sont situées les installations opératoires à travers le circuit formé par le tube latéral (2) et le tube principal (1).

Selon une caractéristique de l'invention, la fonction évent ci-dessus peut être instantanément supprimée et l'ensemble du dispositif mis en position de sécurité par simple ouverture du clapet (3). En effet l'eau du puits (4) monte alors dans le tube principal (1) au delà du point de raccordement du tube latéral (2). Dans le tube latéral (2) l'eau monte de suite à un niveau bien précis qui correspond à l'équilibre hydrostatique entre l'intérieur et l'extérieur du tube sachant qu'à l'intérieur du tube il n'y a que de l'eau qui doit équilibrer une certaine hauteur d'eau dans le puits plus la hauteur de phase liquide de gaz liquéfié du stockage. On voit ainsi que le niveau de l'eau dans le tube latéral (2) s'établit d'autant plus haut que le stockage est plein de gaz liquéfié. Dans le tube principal (1) le niveau auquel va monter l'eau dépend de la situation des installations de surface. Si le circuit du tube principal reste fermé et que sa pression se maintient à la pression de la phase gaz en cavité de stockage, le niveau de l'eau s'établit dans le tube principal (1) à une position voisine de celle atteinte dans le tube latéral (2). Si au contraire le tube principal est décomprimé par mise à l'air libre par exemple la colonne d'eau dans le tube principal (1) sera telle qu'elle compense exactement la pression du stockage. C'est le cas qui nécessite la plus grande quantité d'eau.Si h1 est la profondeur dans le puits (4) d'eau du point de raccordement du tube latéral (2) sur le tube principal (1), la section du haut du puits, sur la hauteur h1,doit être au moins égale à S telle que le volume h1*S soit suffisant pour couvrir la consommation d'eau la plus grande mentionnée ci-dessus. En dessous de la profondeur h1 la section du puits (4) peut être différente de S.

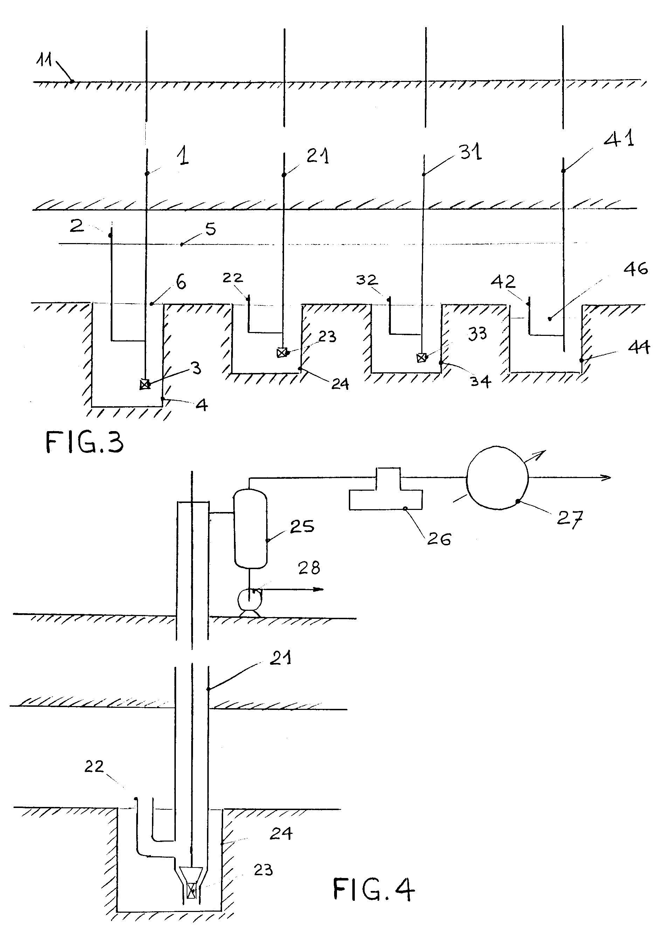

La figure 2 est une vue schématique en coupe du dispositif selon l'invention, Après une mise en sécurité il est possible de revenir à la fonction évent.

Selon une caractéristique de l'invention, après une mise en sécurité hydraulique le principe du retour à la fonction évent consiste à repousser l'eau qui servait de bouchon hydraulique dans le tube principal (1) et dans le tube latéral (2) vers le puits (4). Le fluide servant à repousser l'eau pourra être de la phase gazeuse correspondant au gaz liquéfié stocké (propane gazeux pour un stockage de propane liquide par exemple) ou bien un gaz voisin (propane pour un stockage de butane par exemple) ou un gaz neutre inerte (azote par exemple). Il sera appelé gaz pousseur et devra être disponible à une pression suffisante, toujours supérieure à celle du stockage souterrain.

Selon une autre caractéristique de l'invention,le tube principal(1) est équipé d'une réserve annulaire externe (9) située juste au dessous du point de jonction du tube latéral (2) au tube principal (1). Le tube principal (1) s'arrête près du fond de la réserve ou bien au bas de celle-ci il est perforé d'ouvertures importantes ayant pour effet de faire communiquer le tube principal (1) et la réserve (9) au bas de celle-ci. Le tube principal (1) intact repart depuis le fond de la réserve sur une hauteur suffisante pour recevoir le clapet (3) et assurer la continuité de l'étanchéité vis-à-vis de l'extérieur.

L'étanchéité sera assurée soit directement soit par l'intermédiaire d'une pièce additionnelle entre le clapet (3) et le tube principal (1) par un joint classique disponible sur le marché. Le clapet (3) qui est la seule pièce mécanique en souterrain est fixé au bout d'une ligne de tubes standards (14) soigneusement dimensionnée qui sert à le maintenir à la place désirée en fonction normale, qui sert également à remonter le clapet pour en assurer entretien et réparations et qui sert ensuite à redescendre le clapet à sa position de travail. Lors de toutes les manoeuvres de la ligne de tubes (14) supportant le clapet, le tube principal (1) est en position de sécurité hydraulique et la fonction évent est donc supprimée. Le clapet (3) étant ouvert on envoie du gaz pousseur par un piquage(12) en tête du tube principal (1) afin de repousser l'eau jusqu'au point de jonction du tube latéral (2) sur le tube principal (1). Puis par le piquage (13) en tête de la ligne de tubes (14) supportant le clapet (3) on injecte rapidement une quantité de gaz pousseur destiné à la réserve externe (9). Ce gaz pousseur sort de la ligne de tubes (14) par des trous (8) percés au niveau du fond de la réserve (9). Ce gaz est écarté par un déflecteur (7) situé au dessus des trous (8) mais au dessous de l'ouverture du tube principal (1). Ce gaz remonte donc à l'intérieur de l'annulaire de la réserve (9). L'eau de la réserve déplacée par le gaz pousseur s'échappe dans le puits (4) à travers le clapet (3). Le clapet doit alors être rapidement fermé.

Dans cette situation le bouchon d'eau du tube principal (1) a bien été évacué jusqu'à la jonction avec le tube latéral (2) mais le bouchon d'eau du tube latéral (2) est toujours présent. Dans la partie haute de la réserve (9) le tube principal (1) est percé de quelques trous de faible diamètre calculés pour assurer un écoulement lent du gaz pousseur emprisonné dans la réserve vers l'intérieur du tube principal (1). Le niveau de l'eau dans la réserve annulaire (9) peut alors remonter.Le niveau de l'eau dans le tube principal (1) qui était arrêté à la jonction avec le tube latéral (2) peut alors descendre et libérer la place nécessaire pour recevoir l'eau du bouchon hydraulique du tube latéral (2) au dessous de la jonction des deux tubes. On constate donc que la réserve annulaire-(9)doit être calculée en fonction du volume maximum que pourra atteindre le bouchon hydraulique dans le tube latéral (2)

La figure 3 est un schéma de principe des différentes liaisons fonctionnelles entre le stockage souterrain et la surface.Des équipements lourds mécaniques,électriques ou électroniques servent à assurer les fonctions élémentaires autres que la fonction évent,permettant le fonctionnement du stockage, comme: réception du gaz liquéfié à stocker,extraction du gaz liquéfié hors du stockage, extraction de l'eau d'exhaure, mesures de niveau, de température,de pression, alarmes. Selon une caractéristique de l'invention, tous les équipements lourds sont installés en surface permettant ainsi de concevoir un type de liaison standard entre le stockage et la surface qui peut servir à assurer indifféremment l'une des fonctions autre que l'évent. En fonction des choix opératoires chaque fonction peut être réalisée par une ou plusieurs liaisons entre stockage et surface.Sur la figure 3 ont été représentées par exemple une liaison pour extraction du gaz liquéfié (21), une liaison pour réception du gaz liquéfié (31) et une liaison pour extraction de l'eau d'exhaure (41).Chaque liaison standard comporte un tube latéral (22,32 ou 42,selon la fonction assurée) ouvert dans la phase liquide du gaz liquéfié stocké juste au dessus du niveau du radier de fond du stockage, descendant dans un puits réserve d'eau (24,34 ou 44) et se raccordant au tube principal (21,31 ou 41) qui remonte jusqu'à la surface. Le raccordement entre tube latéral et tube principal se fait dans le puits d'eau en dessous du fond du stockage qui représente le niveau bas de la phase liquide du gaz liquéfié stocké. Le tube principal est terminé sous le point de raccordement par un clapet étanche d'isolement (23 ou 33) nécessaire pour toutes les liaisons sauf pour la liaison d'extraction d'eau d'exhaure.En raison de l'arrivée permanente d'eau d'exhaure dans le stockage, tous les puits d'eau (24,34 ou 44) sont pleins d'eau et en fonctionnement normal le puits (44) d'extraction d'eau d'exhaure a son niveau d'eau inférieur au niveau du radier du stockage et tous les autres puits ont leur niveau d'eau exactement au niveau du radier.

Selon une autre caractéristique de l'invention et comme pour la liaison d'évent, si h2 est la profondeur dans le puits d'eau (24,34 ou 44) du point de raccordement du tube latéral (22,32 ou 42) sur le tube principal (21,31 ou41), la section du haut du puits,sur la hauteur h2 doit être au moins égale à S2 telle que le volume h2*S2 soit suffisant pour couvrir la consommation d'eau la plus grande pour former le bouchon hydraulique. Dans la majorité des cas le puits d'eau est de dimensions assez faibles et la profondeur dans le puits d'eau du clapet (23 ou 33) est également assez faible. Si d est la densité du gaz liquéfié stocké par rapport à l'eau et s la section du tube contenant le clapet (23 ou 33) et débouchant dans le puits, en fonctionnement normal le clapet subit une poussée verticale vers le haut proportionnelle au produit s*(1-d)*h2 de la section du tube par la différence de densité entre l'eau et le liquide stocké et par h2. Cette poussée est relativement faible ce qui explique que le positionnement et le maintien du clapet ne présente pas de difficulté: soit un contrepoids équilibre la poussée verticale et il peut être suspendu à un câble, sinon il peut être descendu au bout d'un train de tiges rigides. Sur le plan de la sécurité toute défaillance soit sur la fixation du clapet soit dans son étanchéité n'a aucune conséquence néfaste puisqu'alors l'eau du puits pénètre dans les tubes et met la liaison en sécurité hydraulique.

La figure 4 est un schéma de principe de la liaison assurant l'extraction du gaz liquéfié hors du stockage, en phase mixte liquide/gaz. Il s'agit d'un exemple.

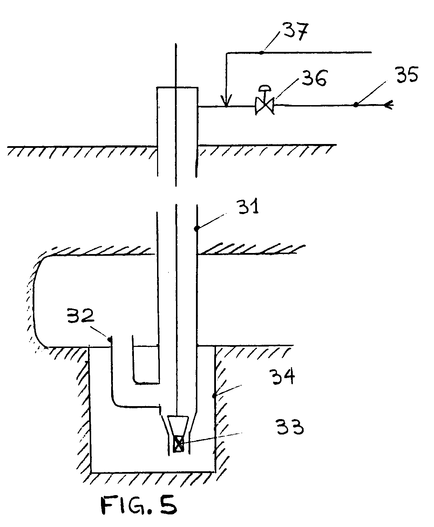

La figure 5 est une vue schématique en coupe de la liaison de réception du gaz liquéfié . Les cas de réception à grand débit concernent les réceptions de produit réfrigéré en lots importants. Selon une caractéristique de l'invention cette réception à grand débit se fait en phase mixte liquide/gaz à travers la ligne principale (31) puis la ligne latérale (32), le clapet (33) étant fermé. Le gaz liquéfié réfrigéré est reçu par la ligne de réception (35) puis détendu dans la vanne de régulation (36) à une pression légèrement inférieure à celle du stockage en régime établi. Un certain débit de gaz vient de la phase gaz du stockage par l'évent et il est injecté dans le gaz liquéfié reçu après sa détente par la ligne gaz (37).

Selon la caractéristique de l'invention cette injection de gaz permet de réaliser un régime d'écoulement stable dans la ligne verticale principale (31) ainsi que de contrôler la pression dans le stockage grâce à la consommation de phase gaz et enfin d'économiser de l'énergie en participant au réchauffement du produit réfrigéré reçu par condensation du gaz injecté.

**Revendications**

1. Dispositif pour garantir la sécurité d'un stockage souterrain de gaz liquéfié, assurant la fonction d'évent d'un stockage souterrain et étant pourvu d'un circuit d'évent qui comporte un tube latéral (2) ouvert dans la phase gaz du stockage, descendant à travers la phase liquide du produit stocké jusqu'à un puits (4) constituant une réserve d'eau et se raccordant à un tube principal (1) remontant du puits à la surface; le raccordement se faisant dans le puits en dessous du fond du stockage qui représente le niveau bas de la phase liquide du gaz liquéfié stocké; ledit tube principal (1) étant terminé en dessous du point de raccordement par un clapet étanche d'isolement (3) permettant à l'eau du puits (4) de pénétrer dans ledit tube principal (1) et, lorsqu'il est fermé et si le tube principal ne comporte pas de bouchon d'eau, de mettre en communication la phase gaz du stockage et les installations opératoires au sol.

2. Dispositif selon la revendication 1 caractérisé en ce que l'ouverture du clapet (3) du tube principal (1) d'évent permet à l'eau du puits de réserve (4) de pénétrer dans ledit tube et dans le tube latéral (2) détruisant ainsi la fonction évent en empêchant toute communication allant de la phase gaz du stockage vers l'extérieur, grâce aux bouchons de sécurité qui se forment dans le tube principal (1) et le tube latéral (2); le puits de réserve d'eau (4) étant calculé pour que son volume au dessus du point de jonction du tube latéral (2) sur le tube principal (1) soit suffisant pour créer le bouchon d'eau équilibrant la pression maximum dans le stockage à n'importe quelle pression possible en tête du tube principal.

3. Dispositif selon l'une des revendications 1 ou 2 caractérisé en ce que la remise en service de la fonction évent après une mise en sécurité hydraulique par formation de bouchon d'eau peut être réalisée en repoussant le bouchon d'eau vers le puits réserve (4) à l'aide d'un gaz pousseur sous pression suffisante pouvant être soit le produit stocké, soit un hydrocarbure voisin, soit un gaz neutre.

4. Dispositif selon l'une quelconque des revendications 1 à 3 caractérisé en ce que le tube principal (1) est équipé en dessous du point de jonction du tube latéral (2) sur le tube principal (1) d'une réserve (9) qui lors de la remise en service de la fonction évent est destinée à être remplie avec du gaz pousseur sous pression injecté par les trous (8) du tube de suspension (14) du clapet (3) et dévié par un déflecteur (7) à travers une ouverture pratiquée dans le tube principal (1) à l'intérieur de la réserve (9); ladite réserve se vidant ensuite de son gaz pousseur par les trous (10) de vidange lente permettant ainsi au niveau d'eau de baisser au dessous du point de jonction du tube latéral (2) sur le tube principal (1) et de libérer la place pour le bouchon d'eau du tube latéral (2) ; le volume de la réserve étant calculé en conséquence , et le clapet (3) étant passé de position ouverte à position fermée au moment où le tube principal est plein de gaz pousseur jusqu'au point de jonction avec le tube latéral (2) et la réserve (9) également pleine de gaz.

5. Dispositif selon l'une quelconque revendications 1 à 4 caractérisé en ce que toute liaison entre stockage et surface , autre que l'évent, étant dépourvue de tout équipement lourd spécialisé peut assurer n'importe laquelle des fonctions autre que la fonction évent; ladite liaison comportant un tube latéral (22,32 ou42 selon la fonction assurée) ouvert dans la phase liquide du gaz liquéfié stocké juste au dessus du niveau du radier de fond du stockage , descendant dans un puits réserve d'eau (24,34 ou 44) et se raccordant au tube principal (21,31 ou41) qui remonte jusqu'à la surface ; ledit raccordement se faisant dans le puits en dessous du fond du stockage qui représente le niveau bas de la phase liquide du gaz liquéfié stocké; ledit tube principal étant terminé en dessous du point de raccordement par un clapet étanche amovible d'isolement (23 ou33)-nécessaire pour toutes les liaisons sauf pour la liaison assurant l'extraction d'eau d'exhaure.

6. Dispositif selon l'une quelconque des revendications 1 à 5 caractérisé en ce que chacune des liaisons standard entre le stockage et la surface plonge dans un puits réserve d'eau (24,34 ou 44) qui contient en permanence au dessus du point de jonction du tube latéral (22,32 ou 42) au tube principal (21,31 ou 41) une quantité d'eau au moins égale à celle nécessaire pour former les bouchons hydrauliques de sécurité dans le tube latéral et le tube principal lors de l'ouverture du clapet étanche d'isolement (23 ou 33) soit automatiquement en cas de danger soit par action volontaire de l'opérateur;ledit clapet étanche subissant en position fermée une poussée vers le haut très faible et toute défaillance dans sa fixation ou son étanchéité allant vers la sécurité par mise en place du bouchon hydraulique de sécurité.

## Claims

1. A device to ensure the safety of an underground liquefied gas storage, achieving the vent function of an underground storage and including a vent line having a lateral tubing (2) open in the storage gas phase, crossing the stored product liquid phase down to a water reserve sump (4) and connected to a main tubing (1) which links said sump to the surface; the connection of the two tubings inside the water sump being located lower than the storage floor which figures the stored liquefied gas liquid phase low level; said main tubing (1) ending down in the sump under the connecting point with a tight isolating valve (3), allowing the water of the sump (4) to flow in the main tubing (1) and the closure of said valve (3) creating the storage gas phase connexion towards the surface operating equipment, when there is no water plug in said main tubing (1).

2. A device according to claim 1 wherein the opening of the vent main tubing (1) isolating valve (3) lets the reserve sump (4) water flow into the main (1) and lateral (2) tubings resulting in the suppression of the vent function, as no more communication is possible from storage gas phase towards surface due to the formation of water plugs in the main tubing (1) and lateral tubing (2); the volume of the said water reserve sump (4) above the connecting point of lateral (2) on main (1) tubings being calculated to supply enough water to create the water plugs balancing the highest possible storage pressure whatever the main tubing (1) pressure is at ground level.

3. A device according to one of claims 1 or 2 wherein the recovery of the vent function, after the vent line had been placed under water plug hydraulic safety, can be achieved by pushing back the said water plug towards the water reserve sump (4) by means of an enough pressurized push gas which can be the stored product, a similar hydrocarbon or an inert gas.

4. A device according to anyone of claims 1 to 3 wherein the main tubing (1) is fitted with a reserve (9) under the junction point to the lateral tubing (2) that is aimed during the vent function restoring operation to be filled up with pressurized push gas introduced through the holes (8) of the valve (3) tubing line (14) and diverted by a deflector (7) through a main tubing (1) opening inside the reserve (9); said push gas then flowing slowly out of the reserve (9) through the small vent holes (10) what permits to lower the water level under the connexion point of lateral (2) and main (1) tubings and so clear enough space to receive the lateral tubing (2) water plug; the reserve volume being calculated accordingly, and the valve (3) operating from open to close position just when the main tubing (1) is filled with push gas down to its connexion point with the lateral tubing (2) and the reserve (9) also filled with gas.

5. A device according to anyone of claims 1 to 4 wherein all the storage to surface connecting lines, except vent line, designed without any heavy specific equipment can achieve any of the operating functions, except the vent function ; said connecting line involving a lateral tubing (22, 32 or 42 depending of the function of the moment) which opens in the stored liquefied gas liquid phase just above storage floor level, then goes down to a water reserve sump (24, 34 or 44) and is connected to a main tubing (21, 31 or 41) which rises up to the surface; said connexion point being located in the sump under the storage floor which is the stored liquefied gas low liquid level; said main tubing ending under the connecting point with a retractable tight isolating valve (23 or 33) necessary for all lines except the seepage water line.

6. A device according to anyone of claims 1 to 5 wherein every standard connecting line between storage and surface extends downwards in a water reserve sump (24, 34 or 44) which holds permanently above the connecting point of the lateral tubing (22, 32 or 42) on the main tubing (21, 31 or 41) at least the necessary amount of water to create the safety water plugs in lateral and main tubings when the tight isolation valve is opened (23 or 33) either automatically in case of danger or by operator's decision ; said isolating valve being submitted in closed position to a very small upwards force and any failure of its fitting or tighness just moving the situation towards a safer one by creating the safety water plugs.

**Patentansprüche**

1. Vorrichtung zum Sichern eines unterirdischen Speichers für verflüssigtes Gas, die als Abzug eines unterirdischen Speichers dient und mit einer Abzugleitung versehen ist, die ein in die Gasphase des Speichers offenes Aeitenrohr (2), das durch die flüssige Phase der gespeicherten Substanz bis in eine Grube (4) hinabreicht, die ein Wasserreservoir bildet, und das an ein von der Grube zur Oberfläche aufsteigendes Hauptrohr (1) angeschlossen ist, wobei der Anschluß in der Grube unterhalb des Speicherbodens, der das untere Niveau der flüssigen Phase des gespeicherten verflüssigten Gases darstellt, hergestellt ist, wobei das Hauptrohr (1) unterhalb des Anschlußpunkts an einem dichten Trennventil (3) endet, das das Wasser der Grube (4) in das Hauptrohr (1) eindringen läßt und das, wenn es geschlossen ist und das Hauptrohr keinen Wassereinschluß aufweist, es ermöglicht, die Gasphase des Speichers und die Betriebseinrichtungen an der Oberfläche zu verbinden.

2. Vorrichtung nach Anspruch 1, dadurch gekennzeichnet, daß die Öffnung des Ventils (3) des Abzugshauptrohrs (1) das Wasser der Grube (4) in das Rohr und das Seitenrohr (2) eindringen läßt und so die Abzugsfunktion unterbindet, indem es jede Verbindung von der Gasphase nach außen mittels der Sicherheitseinschlüsse verhindert, die sich im Hauptrohr (1) und dem Nebenrohr (2) bilden, wobei die Wasserreservoirgrube (4) so berechnet ist, daß ihr Volumen oberhalb des Anschlußpunkts des Seitenrohrs (2) an das Hauptrohr (1) ausreicht, um den Wassereinschluß zu bilden, der den maximalen Druck im Speicher bei jedem beliebigen möglichen Druck am Kopf des Hauptrohrs ausgleicht.

3. Vorrichtung nach einem der Ansprüche 1 oder 2, dadurch gekennzeichnet, daß nach Vornahme einer hydraulischen Sicherung durch Bilden eines Wassereinschlusses die Abzugsfunktion wiederhergestellt werden kann, indem der Wassereinschluß zur Reservoirgrube (4) zurückgetrieben wird mit Hilfe eines Treibgases unter ausreichendem Druck, das die gelagerte Substanz, ein ähnlicher Kohlenwasserstoff oder ein inertes Gas sein kann.

4. Vorrichtung nach einem der Ansprüche 1 bis 3, dadurch gekennzeichnet, daß das Hauptrohr (1) unterhalb des Anschlußpunkts des Seitenrohrs (2) am Hauptrohr (1) mit einem Reservoir (9) versehen ist, das vorgesehen ist, um bei der Wiederherstellung der Abzugsfunktion mit Treibgas unter Druck gefüllt zu werden, das durch die Löcher (8) des Aufhängungsrohrs (14) des Ventils (3) eingespritzt und durch eine Ablenkeinrichtung (7) durch eine im Hauptrohr (1) gebildete Öffnung ins Innere des Reservoirs (9) eingespritzt wird, wobei das Reservoir anschließend sein Treibgas durch die Löcher (10) zur langsamen Entleerung abgibt und so den Wasserstand unter den Verbindungspunkt von Seitenrohr (2) und Hauptrohr (1) abfallen läßt und den Platz freimacht für den Wassereinschluß des Seitenrohrs (2), wobei das Volumen des Reservoirs dementsprechend berechnet ist, und wobei das Ventil (3) in dem Moment von der offenen in die geschlossene Position übergegangen ist, in dem das Hauptrohr bis zum Verbindungsrohr mit dem Seitenrohr (2) und auch das Reservoir (9) gleichermaßen voll Gas sind.

5. Vorrichtung nach einem der Ansprüche 1 bis 4, dadurch gekennzeichnet, daß jede Verbindung zwischen Speicher und Oberfläche mit Ausnahme des Abzugs, die keine spezialisierten schweren Geräte aufweist, und die eine beliebige Funktion mit Ausnahme der des Abzugs haben kann, ein Seitenrohr (22, 32 oder 42, je nach ausgeübter Funktion) aufweist, das zur flüssigen Phase des gespeicherten verflüssigten Gases gerade oberhalb der Speichersohle offen ist, in eine Wasserreservoirgrube (24, 34 oder 44) hinunterreicht und an das Hauptrohr (21, 31 oder 41) angeschlossen ist, das zur Oberfläche aufsteigt, wobei der Anschluß in der Grube unterhalb des Speicherbodens hergestellt ist, der das untere Niveau der flüssigen Phase des gespeicherten flüssigen Gases darstellt, wobei das Hauptrohr unterhalb des Anschlußpunktes an einem losen dichten Trennventil (23 oder 33) endet, das für alle Verbindungen mit Ausnahme jener, die die Entfernung des Grubenwassers sicherstellt, notwendig ist.

6. Vorrichtung nach einem der Ansprüche 1 bis 5, dadurch gekennzeichnet, daß jede der gewöhnlichen Verbindungen zwischen dem Speicher und der Oberfläche in eine Wasserreservoirgrube (24, 34 oder 44) eintaucht, die ständig oberhalb des Anschlußpunkts des Seitenrohrs (22, 32 oder 42) an das Hauptrohr (21, 31 oder 41) eine Wassermenge wenigstens gleich jener enthält, die zur Bildung der hydraulischen Sicherheitseinschlüsse im Seitenrohr und dem Hauptrohr beim automatischen Öffnen im Gefahrenfall oder willkürlichen Öffnen durch die Bedienungsperson notwendig ist, wobei das dichte Ventil in geschlossener Position einen sehr geringen Druck nach oben erfährt und jede Störung seiner Befestigung oder seiner Dichtigkeit zur Sicherung durch Anbringung des hydraulischen Sicherheitseinschlusses führt.

FIG.1

FIG.2

FIG.3

FIG.4

FIG. 5